# EUROPÄISCHE PATENTANMELDUNG

(11) **EP 1 162 480 A2**
(43) Veröffentlichungstag der Anmeldung: **12.12.2001**
(21) Anmeldenummer: 01113333.7
(22) Anmeldetag: 01.06.2001
(51) Int. Cl.: G01V 15/00

(54) **Kontaktloser Transponder**

(30) Priorität: 05.06.2000 DE 20009865 U
(71) Anmelder: cubit electronics Gmbh, 99099 Erfurt (DE)
(72) Erfinder: Michalk, Manfred, Dr., 99096 Erfurt (DE)
(74) Vertreter: Liedtke, Klaus, Dr.

(57) **Zusammenfassung**

2.1 Der Erfindung liegt die Aufgabe zugrunde, einen kontaktlosen Transponder anzugeben, der sehr kostensparend herstellbar ist und der in einfacher Weise an flächenhafte und räumliche Materialien angebracht werden kann.
2.2 Erfindungsgemäß gelingt die Lösung der Aufgabe dadurch, dass der Träger eine für Verpackung geeignete Folie ist, die mindestens eine Schicht aus elektrisch leitfähigem Material enthält, auf der die Antennenanordnung in Form einer vollflächigen Schicht dadurch ausgebildet ist, dass in das elektrisch leitfähige Material ein Isoliergraben so angeordnet ist, dass ein wicklungsartiger Leiterzug gebildet wird.
2.3 Die Erfindung betrifft einen auf einem Träger angeordneten kontaktlosen Transponder mit einer Antennenanordnung und mindestens einem Halbleitermodul.

## Beschreibung

Die Erfindung betrifft einen auf einem Träger angeordneten kontaktlosen Transponder mit einer Antennenanordnung und mindestens einem Halbleitermodul

Die erfindungsgemäße Anordnung findet vorzugsweise Anwendung an Verpakkungsmaterialien, ist aber auch für den Einsatz bei anderen kontaktlosen Transpondern wie Chipkarten, Tickets, Etiketten, Transportgutkennzeichnung und ähnlichen, geeignet.

Antennentragende, elektrisch isolierende Folien werden vorwiegend als flexible, thermoplastische Folien, z.B. aus Polyester, Polyimid oder sonstigem Leiterplattenmaterial hergestellt. Als Antenne sind Spulen üblich, die mehrere Windungen aufweisen, die voneinander beabstandet sind und die auf der antennentragenden Folie befestigt sind. Die Herstellung der Spule kann z.B. durch Ätzen, Leitpastendruck, Aufdampfen, Aufkleben und Drahtlegen erfolgen. Halbleiterchips werden häufig in einem Gehäuse angeordnet. Unter Gehäuse wird im allgemeinen ein durch Kunststoffgießen, Kunststoffspritzen oder Aufkleben von mindestens einer Kunststoffschale bzw. Kunststofffolie erzielter mindestens partieller Schutz des Halbleiterchips verstanden, wobei aus dem halbleiterchipschützenden Bereich mindestens zwei metallische oder metallisierte Anschlüsse herausragen, deren innere Enden mit dem Halbleiterchip und deren äußere Enden mit der weiteren Schaltung verbunden sind. Gehäuse für kontaktlose Chipkartenmodule weisen im allgemeinen zwei Anschlüsse auf. Die beiden Anschlüsse treten vorzugsweise so aus dem Gehäuse, dass sie auf einer Linie liegen, in entgegengesetzter Richtung aus dem Gehäusekörper treten und mit dem Halbleiterchip bzw. dem Gehäusekörper in nahezu einer Ebene liegen. Derartige Gehäuse für Halbleiterchips werden auch als Halbleitermodul oder Modul bezeichnet. Im Folgenden soll die aus Chip und Anschlüssen bestehende Anordnung als Halbleitermodul bezeichnet werden. Das Halbleitermodul kann gegebenenfalls noch mit einem Gehäusekörper versehen sein.

Im Stand der Technik sind verschiedene Verfahren für das ein- oder beidseitige Aufbringen von Leiterzügen auf ein elektrisch isolierendes Material, vorzugsweise auf eine Folie, auf Papier o.a. bekannt.
Für Antennenanordnungen werden dabei gewickelte Drahtantennen, geätzte Antennen, bestehend aus Windungen schmaler Leiterbahnen, gedruckte Antennen, drahtgelegte Antennen sowie gestanzte Antennen, bei denen schmale Leiterzüge aus einer Metallfolie ausgestanzt und mit einer isolierenden Unterlage verbunden werden, verwendet. Es ist dabei auch bekannt, geätzte Antennen mit einer breiten äußeren Leiterbahn einzusetzen.

Nach DE 197 31 969 A1 ist ein elektrisches Bauteil und ein Verfahren zu seiner Herstellung bekannt, bei dem auf der Oberfläche eines elektrisch isolierenden Trägersubstrates eine Aluminiumschicht aufgebracht wird, die mittels Laserschneiden in elektrisch voneinander getrennte Bereiche aufgeteilt ist.

Zielstellung dieser Erfindung ist die kostengünstige Herstellung eines elektrischen Bauteils, bei dem eine Spulenantenne auf einem thermoplastischen Trägersubstrat angebracht ist. Das Bauteil ist insbesondere zur Anwendung bei kontaktlosen Chipkarten vorgesehen.

Ferner ist in DE 40 00 372 A1 ein Verfahren zur Erstellung einer Leiterstruktur auf einem platten- oder folienförmigen isolierenden Träger beschrieben, bei dem der Träger flächig mit einer leitenden Beschichtung versehen wird, und dass dann mittels eines scannerartig verfahrbaren Werkzeugs leitendes Material derart abgetragen wird, dass die gewünschte Leiterstruktur auf dem Träger verbleibt. Derartige Leiterstrukturen werden auf Glasplatten zur Herstellung von LCDs oder für Folientastaturen verwendet.

Bei den bekannten Anordnungen ist nachteilig, dass diese nur mit größerem Aufwand an großflächige Gegenstände aus leitendem Material angebracht werden können. Insbesondere erfordert das Anbringen von elektronischen Modulen, die zur drahtlosen Datenübermittlung dienen, an Verpackungen, die selbst aus mit elektrisch leitenden Folien bestehen, kostenaufwendige Arbeitsgänge.

Der Erfindung liegt die Aufgabe zugrunde einen kontaktlosen Transponder der eingangs genannten Art anzugeben, der sehr kostensparend herstellbar ist und der in einfacher Weise an flächenhafte und räumliche Materialien angebracht werden kann.

Die Aufgabe wird erfindungsgemäß mit einem Transponder gelöst, der die in Anspruch 1 angegebenen Merkmale aufweist.

Vorteilhafte Ausgestaltungen sind in den Unteransprüchen angegeben.

Der Transponder verfügt über eine Antennenanordnung, die in einer vollflächigen Metallschicht angeordnet ist, vorteilhaft in einer elektrisch leitfähigen Folie oder einer aufgeklebten Metallfolie bzw. einer gedruckten, aufgedampften, gesputterten oder chemisch abgeschiedenen Leiterfläche, in die zum Zwecke der Ausbildung eines wicklungsartigen Leiterzuges ein Isoliergraben eingebracht ist. Der Leiterzug kann durch in der Halbleitertechnik übliche Verfahren, beispielsweise durch Ätzen, Lasern, Fräsen, Stanzen oder Ritzen, erzeugt werden. Die Antennenenden werden mit üblichen Verfahren mit einem Chip oder einem Chipmodul kontaktiert.

Die Erfindung zeichnet sich durch eine Reihe von Vorteilen aus.
Die die Antenne bildende Folie ist gleichzeitig das Verpackungsmaterial, so dass minimale Kosten bei hoher Funktionssicherheit gewährleistet sind. Die Anordnung ist an vielfältigen Einsatzfällen anwendbar. Es können an üblichen Verpackungen durch das Einfügen nur eines sehr dünnen und deshalb kaum sichtbaren Isoliergrabens Antennenanordnungen geschaffen werden.
Vorteilhaft ist ferner, dass eine Erhöhung der Schreiblesereichweite gegenüber den üblichen Anordnungen erreicht wird.

Die Erfindung wird im Folgenden anhand eines Ausführungsbeispiels näher erläutert.

In der zugehörigen Zeichnung zeigen
Figur 1 die Draufsicht auf eine ebene Ausführungsform und
Figur 2 einen Schnitt durch eine Anordnung in einem gefalteten Verpackungsmittel.

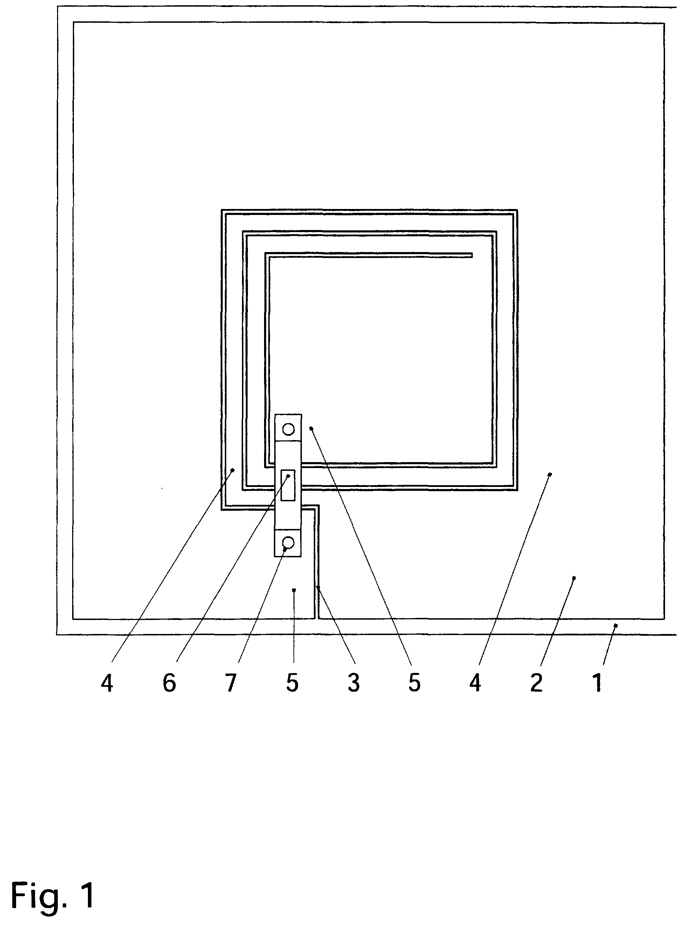

In Figur 1 ist die Draufsicht auf eine ebene Anordnung dargestellt, die in eine aluminumbeschichtete Verpackungsfolie eingearbeitet wurde. Auf dem elektrisch isolierenden Trägermaterial 1, das hier aus einer Papierschicht besteht, befindet sich das elektrisch leitfähige Material 2 in Form einer aufgeklebten, dünnen Metallfolie, z.B. einer 5 µm dicken Aluminiumschicht. Mittels hier nicht näher beschriebenen Strukturierungsverfahren wurde in die Metallfolie ein Isoliergraben 3, der im Beispiel mit einer Breite von 50 µm ausgeführt ist, eingebracht. Der Isoliergraben 3 ist im dargestellten Beispiel in Form rechtwinklig angeordneter Schlitze ausgeführt, so dass die Metallschicht eine Spule 4 mit mehreren Antennenwindungen bildet. An den Enden 5 der Spule 4 wird in üblicher Weise ein Halbleitermodul 6 kontaktiert. Das Halbleitermodul 6 ist zur Metallschicht mit Ausnahme der Kontaktstellen 7 elektrisch isoliert. Die gesamte aus Papierschicht und Metallschicht bestehende Folie kann so als Verpackungsmaterial verwendet werden.

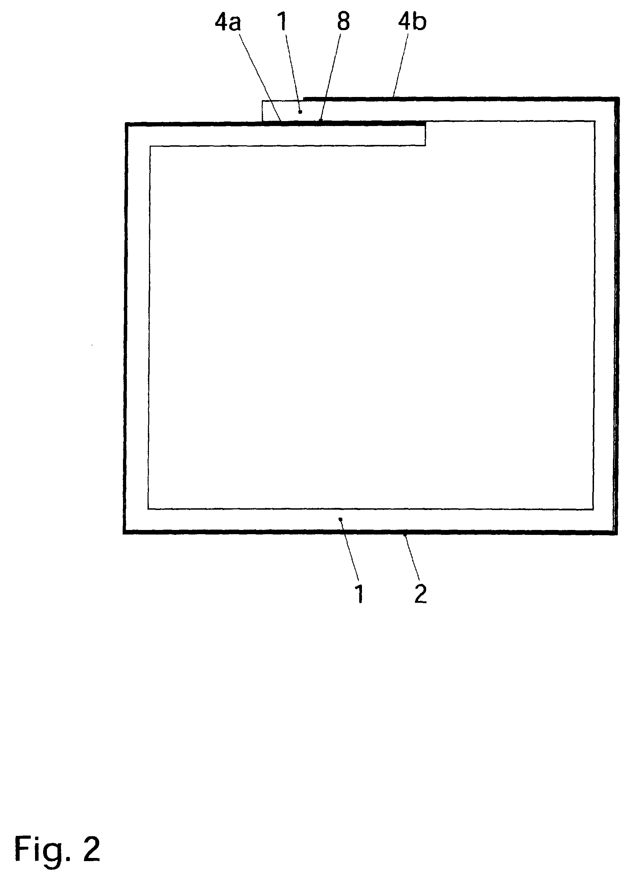

Figur 2 erläuterte die Verwendung der Anordnung in einem zu einem Karton gefalteten Verpackungsmittel Dabei ist es erforderlich, dass an der Überlappungsstelle 8, an der die Folie zweifach angeordnet ist, so dass sich ein oberer Leiterzugabschnitt 4b über einem unteren Leiterzugabschnitt 4a befindet, eine sichere elektrische Isolation dieser beiden Leiterzugabschnitte 4a und 4b gewährleistet. Dies kann in der in Figur 2 gezeigten Weise dadurch erfolgen, indem das elektrisch isolierende Trägermaterial 1 das elektrisch leitende Material 2 um einen geringen Betrag überragt. An der Überlappungsstelle 8 kann aber auch durch eine gesonderte Isolierschicht das elektrisch leitende Material 2 eines Leiterzugabschnitts von den überlappenden anderen Leiterzugabschnitten getrennt werden.

### BEZUGSZEICHENLISTE

- 1: Elektrisch isolierendes Trägermaterial
- 2: Elektrisch leitfähiges Material
- 3: Isoliergraben
- 4: Antennenwicklung; Spule
4a unterer Leiterzugabschnitt
4b oberer Leiterzugabschnitt
- 5: Wicklungsanfang bzw. -ende
- 6: Halbleitermodul
- 7: Kontaktstellen
- 8: Überlappungsstelle

## Patentansprüche

1. Auf einem Träger angeordneter kontaktloser Transponder mit einer Antennenanordnung und mindestens einem Halbleitermodul (6), **dadurch gekennzeichnet, dass** der Träger eine für Verpackung geeignete Folie ist, die mindestens eine Schicht aus elektrisch leitfähigem Material (2) enthält, auf der die Antennenanordnung in Form einer vollflächigen Schicht dadurch ausgebildet ist, dass in das elektrisch leitfähige Material (2) ein Isoliergraben (3) so angeordnet ist, dass ein wicklungsartiger Leiterzug gebildet wird.

2. Kontaktloser Transponder nach Anspruch 1, **dadurch gekennzeichnet, dass** an den Enden (5) des wicklungsartigen Leiterzugs Kontaktstellen (7) angeordnet sind, an denen das Halbleitermodul (6) kontaktiert ist.

3. Kontaktloser Transponder nach Anspruch 1 oder 2, **dadurch gekennzeichnet, dass** das elektrisch leitfähige Material (2) auf einer Verpackung angeordnet ist oder Bestandteil der Verpackung ist.

4. Kontaktloser Transponder nach einem der vorhergehenden Ansprüche,
**dadurch gekennzeichnet, dass** das Halbleitermodul (6) mit Zusatzbauelementen wie Kondensatoren, Induktivitäten und dergleichen, zusammengeschaltet ist.

5. Kontaktloser Transponder nach einem der vorhergehenden Ansprüche,
**dadurch gekennzeichnet, dass** der Transponder zu einer räumlichen Verpakkung gefaltet ist.

6. Kontaktloser Transponder nach Anspruch 5, **dadurch gekennzeichnet, dass** an den Überlappungsstellen das elektrisch leitende Material (2) eines Leiterzugabschnittes durch eine Schicht des elektrisch isolierenden Trägermaterials (1) von dem überlappenden anderen Leiterzugabschnitt getrennt ist.
